# EUROPEAN PATENT APPLICATION

(11) **EP 3 144 120 A1**
(43) Date of publication of application: **22.03.2017**
(21) Application number: 16158419.8
(22) Date of filing: 03.03.2016
(51) Int. Cl.: B29C 45/28, B29C 45/77, B29C 45/17

(54) **HOT RUNNER SYSTEM, INJECTION PROCESS AND COLOR CHANGE PROCESS THEREOF**

(30) Priority: 15.09.2015 CN 201510586241
(71) Applicant: Yudo (Suzhou) Hot Runner Systems Co., Ltd., Province Jiangsu (CN)
(72) Inventor: Lee, Sang Yeol, Suzhou City, Province (CN)
(74) Representative: dompatent von Kreisler Selting Werner - Partnerschaft von Patent- und Rechtsanwälten mbB

(57) **Abstract**

The present disclosure relates to a hot runner system, an injection process and a color change process thereof. The hot runner system includes a nozzle unit and a needle within the nozzle unit. The nozzle unit includes a nozzle body, a runner and a sprue positioned at an end of the nozzle body. The hot runner system further includes a control unit by which the needle is controlled to repeatedly open and close the sprue in an injection cycle. Sizing material in the runner will eject through the sprue when the needle opens the sprue. As a result, it is possible to make the sizing material quickly enter the mold cavity, thus realize the object of quick color change in color change process.

## Description

The present application claims the priority of Chinese Patent Application No. 201510586241.3, titled "HOT RUNNER SYSTEM, INJECTION PROCESS AND COLOR CHANGE PROCESS THEREOF", filed on Sep. 15, 2015 in the SIPO (Sate Intellectual Property Office of the P.R.C.), the disclosure of which is incorporated herein by reference in its entirety.

### TECHNICAL FIELD

The present disclosure relates the field of a hot runner, particularly to a hot runner system, an injection process of the hot runner system and a color change process of the hot runner system.

### BACKGROUND

Currently, injection moulds generally adopted in the injection molding industry are hot runner injection moulds. In comparison with ordinary moulds, plastic products manufactured by the hot runner injection moulds are of higher quality, and the hot runner injection moulds have advantages of saving raw material, improving production efficiency and having high automation etc.

The hot runner systems include an open-type hot runner system and a valve-type hot runner system. Take the valve-type hot runner system for example, the nozzle is controlled to be opened or closed by a needle. The needle of the prior art carries out only a single opening and closing operation in an injection cycle. Sizing material in the nozzle will flow into the mould cavity in the process when the needle is opened so as to realize the mould process. However, the pressure and flow velocity of the sizing material in the nozzle opening process are limited, which will cause long time injection and raw material waste.

Besides, there is a key technology called quick color change technique in the hot runner field. Nowadays, more and more people have different pursuits regarding colors of products. However, due to the cost problem considered by mould producers, the production of multiple color products will be manufactured through a single mould which needs to carry out color change process in manufacturing. The color change process generally requires to remove the residual material in each structure of the hot runner system in advance. The current residual material removing method in the prior art is to constantly enter new material in the hot runner system. The residual material will be taken out through the flow of the new material in the hot runner system until completing the color change. Take the valve-type hot runner system for example, the new material is required to constantly take out the residual material in the process when the nozzle is opened. Since the pressure and flow velocity of the sizing material in the nozzle opening process are limited, which greatly increase the time when the residual material is completely taken out by the new material. As a result, it will cause raw material waste, low efficiency of color change, impure color change and high defective rate etc.

### SUMMARY

An object of the present disclosure is to provide a hot runner system, an injection process of the hot runner system and a color change process of the hot runner system.

In order to achieve the above object, the present disclosure provides a hot runner system including a nozzle unit and a needle within the nozzle unit. The nozzle unit includes a nozzle body, a runner and a sprue positioned at an end of the nozzle body. The hot runner system further includes a control unit by which the needle is controlled to repeatedly open and close the sprue in an injection cycle. Sizing material in the runner will eject through the sprue when the needle opens the sprue.

Preferably, the control unit includes a magnetic valve and a sequence time controller. The magnetic valve is connected with the needle. Time interval for the needle to open and close the sprue is controlled by the magnetic valve of the sequence time controller.

Preferably, the magnetic valve is controlled by the sequence time controller to work through a pulse signal.

Preferably, a frequency scope of the pulse signal is 1Hz to 2Hz.

Preferably, when the needle opens the sprue, an instantaneous velocity of the sizing material around the sprue reaches a maximum value.

Preferably, when the needle opens the sprue, an instantaneous pressure of the sizing material around the sprue reaches a maximum value.

The present disclosure provides an injection process of a hot runner system comprising steps of: opening a sprue to let sizing material in a runner eject through the sprue; closing the sprue after a scheduled time, the sizing material flowing into the runner; and repeating the above steps in an injection cycle.

Preferably, a scope of the scheduled time is 0.25 to 0.7s.

The present disclosure provides a color change process of a hot runner system comprising steps of: opening a sprue, new added material and residual material in a runner together ejecting through the sprue; closing the sprue after a scheduled time, the new added material continuously flowing into the runner; and repeating the above steps in an injection cycle.

Preferably, a scope of the scheduled time is 0.25 to 0.7s.

In comparison with prior art, with the control unit controlling the needle to repeatedly open and close the sprue in an injection cycle, pressure and velocity of the sizing material are capable of realizing short accumulation and release in the process of instantaneously opening and closing the needle, in order to realize injection of the sizing material. As a result, it is possible to make the sizing material quickly enter the mold cavity, thus realize the object of quick color change in color change process.

### BRIEF DESCRIPTION OF THE DRAWINGS

FIG. 1 is a principle schematic view of an injection system in accordance with an illustrated embodiment of the present disclosure;
FIG. 2 is a structural schematic view of a mould system in accordance with an illustrated embodiment of the present disclosure;
FIG. 3 is a structural schematic view of a hot runner system of a mould in accordance with an illustrated embodiment of the present disclosure;
FIG. 4 is a schematic view showing a needle closes a sprue in accordance with an illustrated embodiment of the present disclosure;
FIG. 5 is a schematic view showing a needle opens a sprue in accordance with an illustrated embodiment of the present disclosure;
FIG. 6 is a structural view of a control unit in accordance with an illustrated embodiment of the present disclosure;
FIG. 7 is a structural schematic view of a magnetic valve in accordance with an illustrated embodiment of the present disclosure;
FIG. 8 is a schematic view of showing changes of pressure and flow velocity in the runner; and
FIG. 9 is a process of hot runner injection by timing control in accordance with an illustrated embodiment of the present disclosure.

### ILLUSTRATED EMBODIMENT

Detailed description of the present application will be depicted in combination with embodiments shown in figures. It should be noted that the present application should not be restricted to the embodiments, and modifications of structure, method or function to those of ordinary skill in the art according to the embodiments are all included within the protection scope of the present application.

In each figure of the present disclosure, for easy graphical representation, some size of structure or part will be exaggerative relative to other structure or part, therefore the figures are only for illustrating the basic structure of the theme of the present application.

In addition, terminologies representing relative space positions such as "on", "top", "under" and "bottom" are convenient to describe a unit or feature relative to another unit or feature illustrated in the figures. The terminologies of relative space positions can be intended to include other different orientations of the equipment in use or work, not limited to the orientations shown in figures. For example, if the equipment in figures is overturned, then the unit being described to be positioned "under" or "at the bottom of" the other unit or feature will be accordingly positioned "on" or "on top of" the other unit or feature. Therefore, the exemplary terminology "bottom" can include two kinds of orientations like "top" and "bottom". The equipment can otherwise be directed (90-degree rotation or other towards) and the description language is correspondingly interpreted relevant to the space used in the present application.

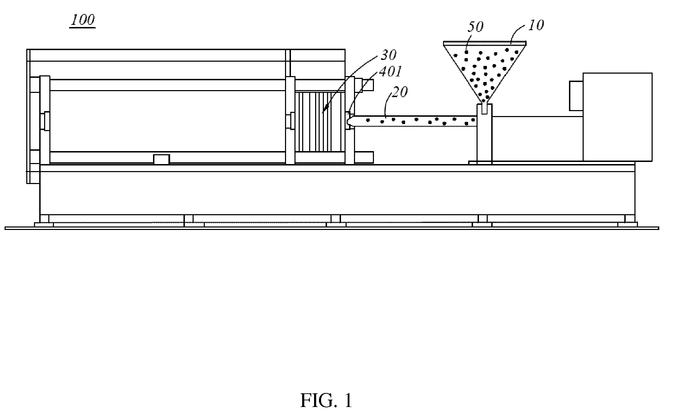

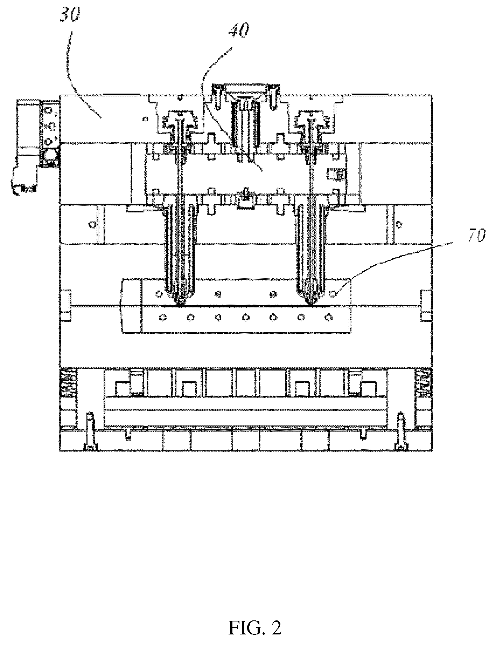

FIG. 1 discloses a principle schematic view of an injection system 100 in accordance with an illustrated embodiment of the present disclosure. This embodiment will take a valve-type injection system for example. The injection system 100 includes a hopper 10, a barrel 20 and a mold system 30. The hopper 10 is adapted for injecting sizing material 50. The barrel 20 is adapted for mixing the sizing material 50 and delivering the mixed sizing material 50 into the mold system 30. The mold system 30 carries out an injection molding process of the received sizing material 50. Herein, referring to FIG. 2, the mold system 30 includes a hot runner system 40. An end of the hot runner system 40 adjacent to the barrel 20 is provided with a sizing material entrance 401. An end of the barrel 20 away from the hopper 10 is connected with the sizing material entrance 401. Therefore, the sizing material 50 in the barrel 20 will enter the hot runner system 40 via the sizing material entrance 401. In the course of conveying the above-mentioned sizing material 50, the injection system 100 is provided with a plurality of heating apparatuses (not shown) to keep the sizing material 50 in melting state, thus ensures the convey of the sizing material 50 is unobstructed.

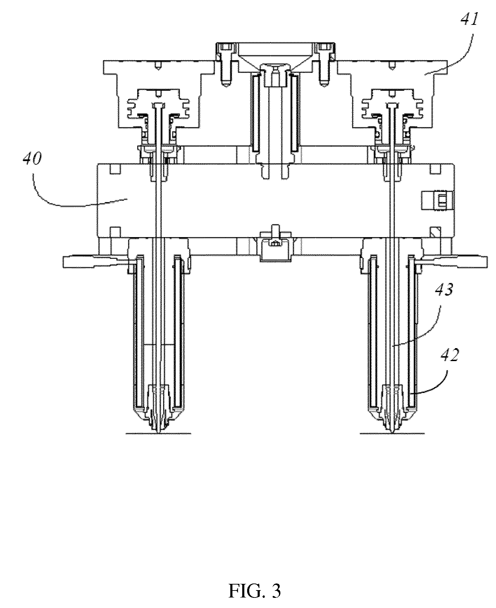

As shown in FIG. 3, the hot runner system 40 includes a plurality of nozzle units 42 and a plurality of needles 43 corresponding to the nozzle units 42. The needle 43 is connected with a cylinder 41, thus it is possible to control back and forth movement of the needle 43 relative to the nozzle units 42 by the cylinder 41.

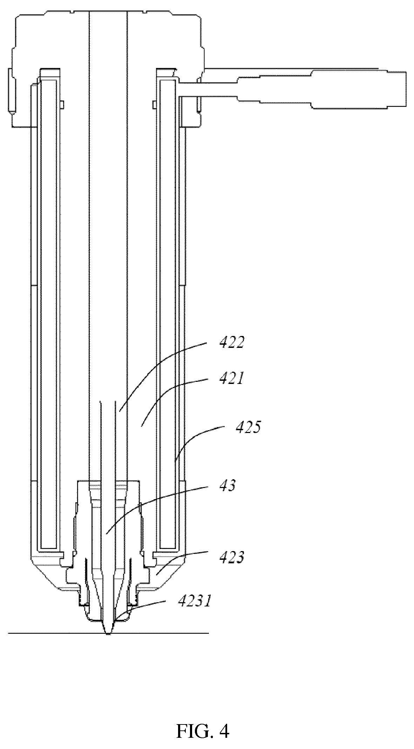

Referring to FIG. 4, the nozzle units 42 include a nozzle body 421 and a runner 422. In detail, an end of the nozzle body 421 is arranged with a cast gate cover 423 which includes a sprue 4231 corresponding to the runner 422. The needle 43 moves back and forth in the runner 422 in order to realize opening and closing the sprue 4231. The outside of the nozzle body 421 is also arranged with a heating part 425 which is adapted for keeping required temperature of the sizing material 50 when it flows through the nozzle unit 42 so that the sizing material 50 flowing through the nozzle unit 42 can be kept in melting state. In the present embodiment, the nozzle body 421 is made of good heat conduction effect and high temperature resistant material.

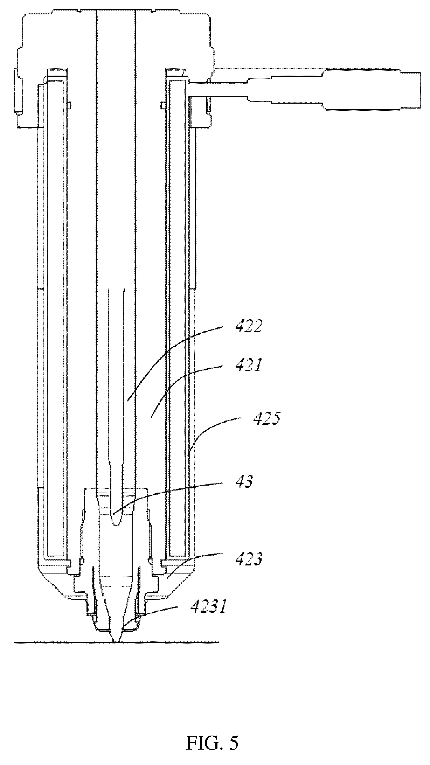

Later on, the sizing material 50 in the runner 422 will enter a mold cavity 70 for molding products. In detail, the sizing material 50 entered the hot runner system 40 will flow in the runner 422 of each nozzle unit 42. As shown in FIG. 4, at an initial state, the needle 43 will move to the sprue 4231 and seal the sprue 4231. When the sizing material 50 in the runner 422 accumulates a certain extent, as shown in FIG. 5, the needle 43 will move towards a direction away from the sprue 4231. The sprue 4231 is thus opened and the sizing material 50 in the runner 422 flows into the mold cavity 70 through the sprue 4231. As a result, mold-closing injection process can be carried out.

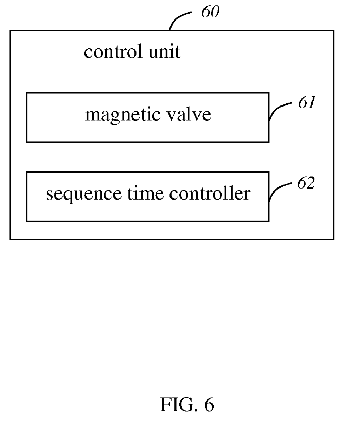

In the present embodiment, as shown in FIG. 6, the injection system 100 also includes a control unit 60 which is adapted for controlling the needle 43 repeatedly opens and closes the sprue 4231 in an injection cycle, and the sizing material 50 in the runner 422 ejects through the sprue 4231 when the needle 43 opens the sprue 4231.

Described herein, the needle 43 is controlled by the control unit 60 to repeatedly open and close the sprue 4231 in an injection cycle, and the time interval of each opening and closing of the sprue 4231 is very short. Thus, when the needle 43 closes the sprue 4231, the sizing material 50 accumulates around the sprue 4231. When the needle 43 opens the sprue 4231, the sizing material 50 gathered is discharged and ejects through the sprue 4231. The sizing material 50 around the sprue 4231 can be kept in ejecting state when the sprue 4231 is shortly opened or closed by the needle 43, which means the sizing material 50 can repeatedly eject through the sprue 4231 in an injection cycle. As a result, it is possible to make the sizing material 50 quickly enter the mold cavity 70, thus realize the object of quick color change in color change process.

In detail, when the sprue 4231 is in a closed status, the speed of the sizing material 50 around the sprue 4231 increases gradually. When the sprue 4231 is opened, the speed of the sizing material 50 around the sprue 4231 reduces gradually. At the moment when the needle 43 opens the sprue 4231, the instantaneous velocity of the sizing material 50 around the sprue 4231 reaches a maximum value, which means the sizing material 50 ejects through the sprue 4231. Besides, when the sprue 4231 is in a closed status, the pressure of the sizing material 50 around the sprue 4231 increases gradually. When the sprue 4231 is opened, the pressure of the sizing material 50 around the sprue 4231 reduces gradually. At the moment when the needle 43 opens the sprue 4231, the instantaneous pressure of the sizing material 50 around the sprue 4231 reaches a maximum value, which means the sizing material 50 ejects through the sprue 4231. Herein, when the time interval that each needle 43 opens and closes the sprue 4231 is short, it is possible for the sizing material 50 to constantly accumulate and release around the sprue 4231. As a result, it is possible for the sizing material 50 to achieve repeatedly high-voltage and high-speed injection in an injection cycle. At the same time, the loss of pressure and speed is small which drastically increases the efficiency. Particularly in the color change process, repeated high-voltage and high-speed injection in a single injection cycle can quickly dischage the new added material and the residual material in the runner 422 after fully mixed, thus it is possible to quickly remove the residual material in the runner 422 and shorten the color change time.

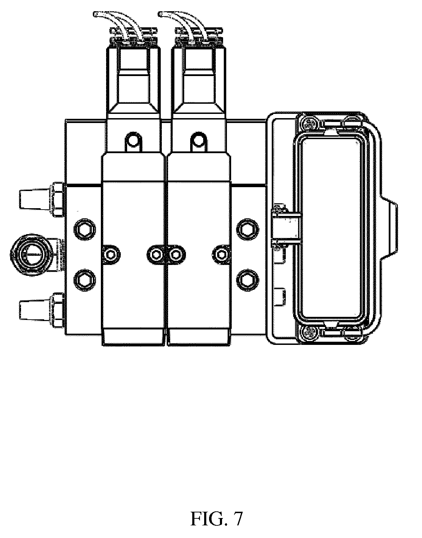

In the present embodiment, as shown in FIGS. 6 and 7, the control unit 60 includes a magnetic valve 61 and a sequence time controller 62. The magnetic valve 61 is connected with the needle 43. Each time interval for the needle 43 to open and close the sprue 4231 can be controlled by the magnetic valve 61 of the sequence time controller 62. In detail, the work of the magnetic valve 61 is controlled by the sequence time controller 62 through pulse signal, and the frequency scope of the pulse signal is 1Hz to 2Hz. Each time interval for the needle 43 to open and close the sprue 4231 can be controlled by sending pulse signal to the magnetic valve 61 from the sequence time controller 62, thus to control the velocity and pressure of the sizing material 50 ejecting through the sprue 4231.

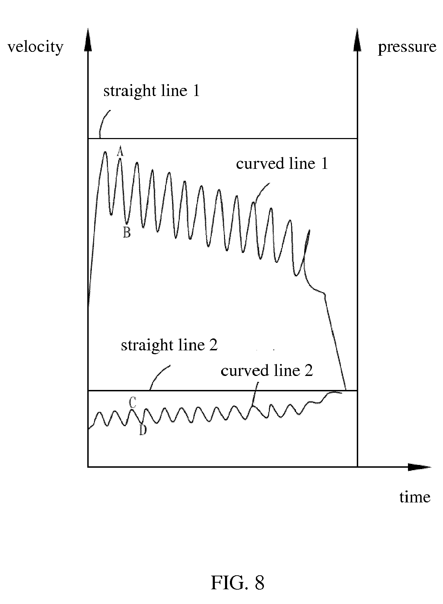

Herein, control process of the pressure and velocity of the sequence time controller 62 will be simply introduced. As shown in FIG. 8, the straight line 1 and straight line 2 represent default pressure and velocity variation figures respectively. The curved line 1 and curved line 2 represent pressure and velocity variation figures of actual measurement, respectively. It is understandable from the curved line 1 that in an injection cycle, the pressure is fluctuated like a wave line. In detail, when the needle 43 closes the sprue 4231, the sizing material 50 gathers around the sprue 4231, and the pressure at the sprue 4231 increases to a maximum value gradually, as shown in the wave crest point A of the curved line 1. Later on, the needle 43 opens the sprue 4231, the sizing material 50 is ejected through the sprue 4231, and the pressure at the sprue 4231 is decreased to a minimum value gradually, as shown in the trough point B of the curved line 1. Along with the needle 43 constantly switching between an open state and a closed state of the sprue 4231, the pressure at the sprue 4231 also changes constantly, and at each moment when declined from the wave crest point A is the moment when the sizing material 50 ejects through the sprue 4231. Here, the variation tendency of the curved line 1 is controlled by the sequence time controller 62.

In addition, as shown by the curved line 2 in FIG. 8, in a single injection cycle, the speed fluctuates like a wave line. In detail, when the needle 43 closes the sprue 4231, the sizing material 50 gathers around the sprue 4231. The instantaneous velocity at the sprue 4231 increases to a maximum value gradually, as shown in the wave crest point C of the curved line 2. Then, the needle 43 opens the sprue 4231, and the sizing material 50 sprays from the sprue 4231. The instantaneous velocity at the sprue 4231 is decreased to a minimum value gradually, as shown in the trough point D of the curved line 2. Along with the needle 43 constantly switching between an open state and a closed state of the sprue 4231, the pressure at the sprue 4231 also changes constantly, and at each moment when declined from the wave crest point C is the moment when the sizing material 50 ejects through the sprue 4231. Here, the variation tendency of the curved line 2 is controlled by the sequence time controller 62.

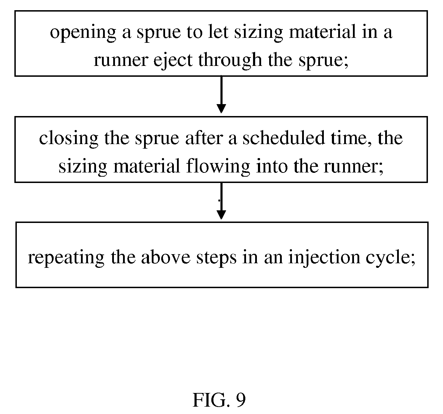

As shown in FIG. 9, an embodiment of the present disclosure also provides an injection process of a hot runner. In conjunction with the explanation of the injection system 100 described above, the injection process includes steps of:
opening the sprue 4231, the sizing material 50 in the runner 422 ejects from the sprue 4231;
closing the sprue 4231 after a scheduled time, the sizing material 50 flows into the runner 422; and
repeating the above steps in a single injection cycle.

Here, the scope of the scheduled time is 0.25 to 0.7s. The needle 43 is controlled to repeatedly open and close the sprue 4231 in an injection cycle, and the time interval of each opening and closing of the sprue 4231 is very short. Thus, when the needle 43 closes the sprue 4231, the sizing material 50 accumulates around the sprue 4231. When the needle 43 opens the sprue 4231, the sizing material 50 gathered is discharged and ejects through the sprue 4231. With the needle 43 repeatedly opening and closing the sprue 4231, the sizing material 50 will repeatedly eject from the sprue 4231. As a result, it is possible to make the sizing material 50 quickly enter the mold cavity 70, thus realize the object of quick color change in color change process.

Hereinafter, an embodiment of the present disclosure regarding the color change process of the hot runner system will be described. In conjunction with the explanation of the injection system 100 described above, the color change process includes steps of:
cleaning the hopper 10; In detail, the residual material in the hopper 10 is unloaded from a discharging mouth (not labeled) of the hopper 10; Then, the hopper 10 is blow-dried after being cleaned to ensure no resident material in the hopper 10;
adding new material; In detail, the material with requested color or a color masterbatch will be added to the hopper 10. Before adding, it is necessary to check whether the new material has impurity or other matter.
increasing temperature; In detail, the temperature of the product mould is improved 15 degrees, the temperature of a shunting plate and the nozzle unit 42 is improved 30 degrees, and the temperature of the barrel 20 is improved 10 degrees, thus to ensure that both the new added material and the residual material are in melting state;
removing the residual material in the barrel 20; In detail, the barrel 20 at this moment is disconnected with the sizing material entrance 401. After temperature stabilization, the residual material in the barrel 20 will be removed by empty ejecting the barrel 20 until the new material color ejected is pure.
connecting the barrel 20 with the sizing material entrance 401 to carry out a mold-closing injection process.

In a first injection cycle, the sequence time controller 62 controls back and forth movement of the needle 43 by the magnetic valve 61. New material mixes with the residual material in the runner 422 of the nozzle unit 42 and injects into the mold cavity through the sprue 4231.

After the first injection cycle terminates, the mold will be opened in order to take out the sample.

Then, in a second injection cycle to a N injection cycle, operation as "closing mold-injection-opening mold-take out sample" will be repeatedly carried out, until the sample product is of non-mixed color and no watering flower appears around the sprue 4231, and thus the color change is completed.

Here, if using traditional color change technique, it roughly needs to carry out 60 time mold openings before the color change is completed, and the defective product rate is about 5%. However, under the control of the sequence time controller 62, the present disclosure can realize continuous injection of the new added material and the residual material after mixed, which will accelerate removing speed of the residual material and decrease the number of mold opening times. Color change of the present disclosure can be completed after roughly carrying out 20 time mold openings, and the defective product rate can be greatly reduced to about 2%. In comparison with tradition technologies, the present disclosure can improve production efficiency by 200%, save cost by 70% and reduce defective product rate by 3%. Therefore, it is possible for the present disclosure to provide excellent product quality, improve the efficiency and save cost.

It is to be understood, however, that even though exemplary embodiments have been set out in the foregoing description, it does not mean that each embodiment has only one independent technical solution. The narration of the specification is only for clear description. Those of ordinary skill in the art should consider the specification as a whole. Technical solutions of all the embodiments can be appropriately combined to form other embodiments which are understandable by those skilled in the art.

Series of detailed instructions listed above is just for the invention of feasibility implementation specific instructions, they are not used to limit the scope of protection of the invention, without departing from the spirit of invention skills equivalent implementations or changes made should be included in the scope of protection of the invention.

## Claims

1. A hot runner system comprising a nozzle unit and a needle within the nozzle unit, the nozzle unit comprising a nozzle body, a runner and a sprue positioned at an end of the nozzle body, **characterized in that** the hot runner system further comprises a control unit by which the needle is controlled to repeatedly open and close the sprue in an injection cycle, and sizing material in the runner will eject through the sprue when the needle opens the sprue.

2. The hot runner system as claimed in claim 1, **characterized in that** the control unit comprises a magnetic valve and a sequence time controller, the magnetic valve being connected with the needle, time interval for the needle to open and close the sprue being controlled by the magnetic valve of the sequence time controller.

3. The hot runner system as claimed in claim 2, **characterized in that** the magnetic valve is controlled by the sequence time controller to work through a pulse signal.

4. The hot runner system as claimed in claim 3, **characterized in that** a frequency scope of the pulse signal is 1Hz to 2Hz.

5. The hot runner system as claimed in claim 1, **characterized in that** when the needle opens the sprue, an instantaneous velocity of the sizing material around the sprue reaches a maximum value.

6. The hot runner system as claimed in claim 1, **characterized in that** when the needle opens the sprue, an instantaneous pressure of the sizing material around the sprue reaches a maximum value.

7. An injection process of a hot runner system, **characterized in that** the injection process comprises steps of:
opening a sprue to let sizing material in a runner eject through the sprue;
closing the sprue after a scheduled time, the sizing material flowing into the runner; and
repeating the above steps in an injection cycle.

8. The injection process of the hot runner system as claimed in claim 7, **characterized in that** a scope of the scheduled time is 0.25 to 0.7s.

9. A color change process of a hot runner system, **characterized in that** the color change process comprises steps of:
opening a sprue, new added material and residual material in a runner together ejecting through the sprue;
closing the sprue after a scheduled time, the new added material continuously flowing into the runner; and
repeating the above steps in an injection cycle.

10. The color change process of the hot runner system as claimed in claim 9, **characterized in that** a scope of the scheduled time is 0.25 to 0.7s.
